# EUROPEAN PATENT APPLICATION

(11) **EP 2 562 026 A1**
(43) Date of publication of application: **27.02.2013**
(21) Application number: 10850019.0
(22) Date of filing: 24.05.2010
(51) Int. Cl.: B60L 11/00, B60L 11/18

(54) **WHOLE-VEHICLE INTEGRATED CONTROL SYSTEM FOR MINI ELECTRIC CAR**

(30) Priority: 19.04.2010 CN 201010151002
(71) Applicant: Bao, Wenguang, Economic Development Zone Huangyan Taizhou Zhejiang 318020 (CN)
(72) Inventor: BAO, Wenguang, Taizhou Zhejiang 318020 (CN)
(74) Representative: Rutz, Andrea
(86) International application number: PCT/CN2010/000734
(87) International publication number: WO 2011/130885

(57) **Abstract**

A whole-vehicle integrated control system for a mini electric car includes a motor controller (1), a regenerative brake controller (2), a whole vehicle controller (3), a battery management system (4), a charger (5), a CAN instrument display (6) and a CAN bus network. Said CAN bus network is divided into a low-speed CAN bus network and a high-speed CAN bus network. The motor controller (1) and the regenerative brake controller (2) are connected with the whole vehicle controller (3) via the high-speed CAN bus network. The battery management system (4), the charger (5) and the CAN instrument display (6) are connected with the whole vehicle controller (3) via the low-speed CAN bus network. Compared with the prior whole-vehicle electronic control technology, the integrated control system builds an onboard network topology structure for the electronic control system of the mini electric car, which is complete in function and economical. The performance of a power battery and a driving motor is played to the greatest extent with the least hardware configuration. The control and protection strategies under various working conditions are realized through the whole vehicle controller, so the safety and the reliability of the whole-vehicle electric control system are improved.

## Description

### FIELD OF THE INVENTION

The present invention relates to a whole vehicle integrated control system for a mini electric car.

### BACKGROUND OF THE INVENTION

Development of new-energy vehicles concerns the national economy and the people's livelihood, and governments of various countries coincidentally promote the development of new-energy vehicles to a level of "saving economic artery of enterprises and country". Currently, the competition in the electric vehicle industry at home and abroad is fierce, but most of the electric vehicles on market have no integral and effective control system, and there are many problems in coordination and distribution of various phases, which seriously obstruct the development of the electric vehicle industry.

### SUMMARY OF THE INVENTION

To solve the problems in the prior art, an object of the present invention is to provide a technical solution of a whole vehicle integrated control system for a mini electric car.

The whole vehicle integrated control system for the mini electric car includes a motor controller, a regenerative brake controller, a whole vehicle controller, a battery management system, a charger, a CAN instrument display and a CAN bus network, the CAN bus network includes a low-speed CAN bus network and a high-speed CAN bus network, the motor controller and the regenerative brake controller are connected with the whole vehicle controller via the high-speed CAN bus network, the battery management system, the charger and the CAN instrument display are connected with the whole vehicle controller via the low-speed CAN bus network.

In the whole vehicle integrated control system for the mini electric car, a microcontroller is provided in the whole vehicle controller, the microcontroller is provided with a power supply and communication interface, a high-speed CAN interface, a low-speed CAN interface and interfaces connected with an instrument driver, an information storage, an analog signal processor and a digital signal processor.

In the whole vehicle integrated control system for the mini electric car, a motor control unit is provided in the motor controller, the motor control unit is provided with a CAN interface, a power supply interface and interfaces connected with a current sensor, a temperature sensor and a regenerative brake control unit, a power amplifier unit, a position sensor and a speed sensor are provided between the motor control unit and a motor, and the power amplifier unit is connected with the power supply interface.

In the whole vehicle integrated control system for the mini electric car, a battery management unit is provided in the battery management system, the battery management unit is provided with a CAN interface and interfaces connected with information of battery pack 1, information of battery pack 2, information of battery pack 3, information of battery pack 4, total-current information and a battery information storage and display unit.

In the whole vehicle integrated control system for the mini electric car, a charger control unit is provided in the charger, the charger control unit is provided with a CAN interface, an external power supply interface and an internal power supply interface, a first power amplifier unit is provided between the external power supply interface, the internal power supply interface and the motor control unit.

In the whole vehicle integrated control system for the mini electric car, an instrument control unit is provided in the CAN instrument display, the instrument control unit is provided with an electricity meter control interface, a speedometer control interface, an ammeter control interface, a voltmeter control interface, an alarm control interface, an indicator light control interface and a CAN interface, a CAN information process unit is provided between the instrument control unit and the CAN interface.

The above whole vehicle integrated control system for the mini electric car is a whole vehicle distributed control system for a mini car of CAN bus network, which is integrated by weak electricity control, strong electricity management, battery charging and discharging control, braking energy recovery, whole vehicle fault protection, whole vehicle comprehensive control strategy, instrument signal and drive signal management and the like. With special design and configuration of the in-vehicle network topological structure of the electronic control system of the mini electric car, the operating condition in the city is fully considered, the whole vehicle comprehensive control strategy, the in-vehicle charging technology and the regenerative brake technology aimed at safety driving are adopted, and the energy recovery control for energy saving is added while the safety and the environmental protection are ensured.

Compared with the existing whole vehicle electronic control technology, a full-functional and economical in-vehicle network topological structure of an electronic control system of a mini electric car is established, performances of the power battery and the drive motor are fully exerted with a configuration of minimal hardware, the control strategy and the protection strategy under various operating conditions are implemented by the whole vehicle controller, and the safety and the reliability of the whole vehicle electronic control system are improved. Compared with other whole vehicle control systems, the present system has a full control function, a fine structure and a small number of wiring harness, the reliability of the system is enhanced, and the availability and the economy of the whole vehicle control are significantly improved.

### BRIEF DESCRIPTION OF THE DRAWINGS

Figure 1 is a block diagram of modules of the present invention;

Figure 2 is a block diagram of a whole vehicle controller of the present invention;

Figure 3 is a block diagram of a motor controller of the present invention;

Figure 4 is a block diagram of a battery management system of the present invention;

Figure 5 is a block diagram of a charger of the present invention; and

Figure 6 is a block diagram of a CAN instrument display of the present invention.

### DETAILED DESCRIPTION OF THE INVENTION

Hereinafter, the present invention will be further described in conjunction with the drawings of the description.

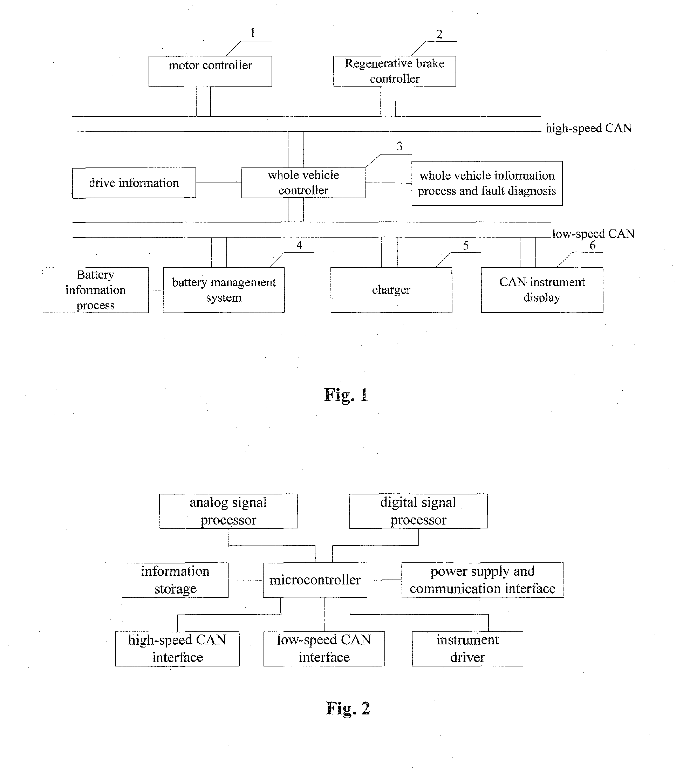

As shown in Figure 1, a whole vehicle integrated control system for a mini electric car includes a motor controller 1, a regenerative brake controller 2, a whole vehicle controller 3,-a battery management system 4, a charger 5, a CAN instrument display 6 and a CAN bus network. According to different requirements on real-time control of respective electronic control components and requirement on reliability of bus transmission, the whole in-vehicle CAN bus network is partitioned into a low-speed CAN bus network and a high-speed CAN bus network, which constitutes a distributed control system of the mini electric car, all electronic control units are ensured to implement information interaction through the whole vehicle controller 1, and centralized management, decentralized control, risk sharing, timeliness and reliability are realized; the motor controller 1 and the regenerative brake controller 2 which require high response speed are connected with the whole vehicle controller 3 via the high-speed CAN bus network, the battery management system 4, the charger 5 and the CAN instrument display 6 which require lower response speed are connected with the whole vehicle controller 3 via the low-speed CAN bus network, and the two CAN bus networks are separated with each other. The whole vehicle controller 1 functions as a gateway while implementing the whole vehicle comprehensive control, each electronic control unit is provided with a corresponding CAN interface, which is connected with a respective specified CAN network according to a SAE J1939 protocol. The drive information is directly inputted into the whole vehicle controller 1 for timely processing, and all CAN information on the in-vehicle network can be displayed, stored and processed by an offline information process unit for a purpose of fault diagnosis. The battery management system 4 directly performs an automatic charging control on the power battery pack by the charger 5, and charging and discharging state information of all monomer batteries and the battery packs is displayed and stored by the battery information process unit which may be offline, for being used by detecting personnel. Main state information of the battery pack is displayed by the CAN instrument on the vehicle, for being used by the driver. Each electronic control unit is provided with a self-diagnosis and self-protection function, and the whole vehicle controller 1 ensures driving safety and whole vehicle system safety according to the current operating condition and capability ranges of respective components.

As shown in Figure 2, a microcontroller is provided in the whole vehicle controller 3, and the microcontroller is provided with a power supply and communication interface, a high-speed CAN interface, a low-speed CAN interface and interfaces connected with an instrument driver, an information storage, an analog signal processor and a digital signal processor. The whole vehicle controller 1 manages, coordinates and monitors respective phases of the power transmission chain of the mini electric car, for improving the energy utilization efficiency of the whole vehicle, and ensuring safety and reliability. The controller collects an analog quantity drive signal and a digital quantity drive signal by an optical-coupler, respectively obtains related information of the motor and the battery system by two CAN buses with high-speed optical-couplers, to perform analyzation and calculation, then issues instructions to the motor controller 1 and the battery management system 4 by the two CAN buses with the high-speed optical-couplers, for achieving a whole vehicle drive control, an energy optimization control and a braking recovery control. The controller further has a CAN instrument interface function, and displays the whole vehicle state information by the CAN instrument, and the controller further has a perfect fault diagnosis and process function and a whole vehicle gateway and network management function.

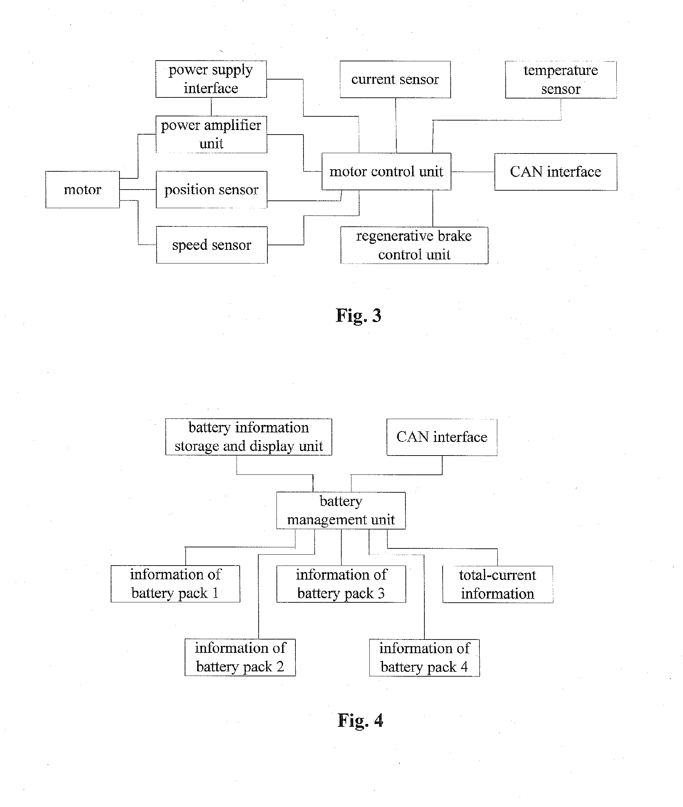

As shown in Figure 3, a motor control unit is provided in the motor controller 1, the motor control unit is provided with a CAN interface, a power supply interface and interfaces connected with a current sensor, a temperature sensor and a regenerative brake control unit, a power amplifier unit, a position sensor and a speed sensor are provided between the motor control unit and the motor, and the power amplifier unit is connected with the power supply interface. The motor control unit receives the control instruction of the whole vehicle controller 1 via the CAN interface in real time, to implement a brushless direct current single motor control. The regenerative brake control is implemented when the vehicle is braked to achieve energy recovery. The motor control unit collects motor rotator position information, motor rotation speed information, phase current information and temperature information of bodies of the motor and the motor controller 1 in real time, and sends the information to the whole vehicle controller 1 via the CAN interface in real time, to implement power distribution control of the whole vehicle driving.

As shown in Figure 4, a battery management unit is provided in the battery management system 4, the battery management unit is provided with a CAN interface and interfaces connected with information of battery pack 1, information of battery pack 2, information of battery pack 3, information of battery pack 4, total-current information and a battery information storage and display unit. The battery management system 4 collects voltage information and temperature information of the four battery packs and total-current information according to the configured power batteries, and performs a monomer balance charging control. The battery management system 4 also, by the battery information storage and display unit which may be offline, calibrates a reference parameter of the battery, performs monomer battery information storage and display, and estimates SOC of the power battery pack. The battery management system 4 also sends the main state information of the battery to the whole vehicle controller 1 via the inner CAN interface in real time to perform a whole vehicle energy management control, and displays the information to the driver by the CAN instrument.

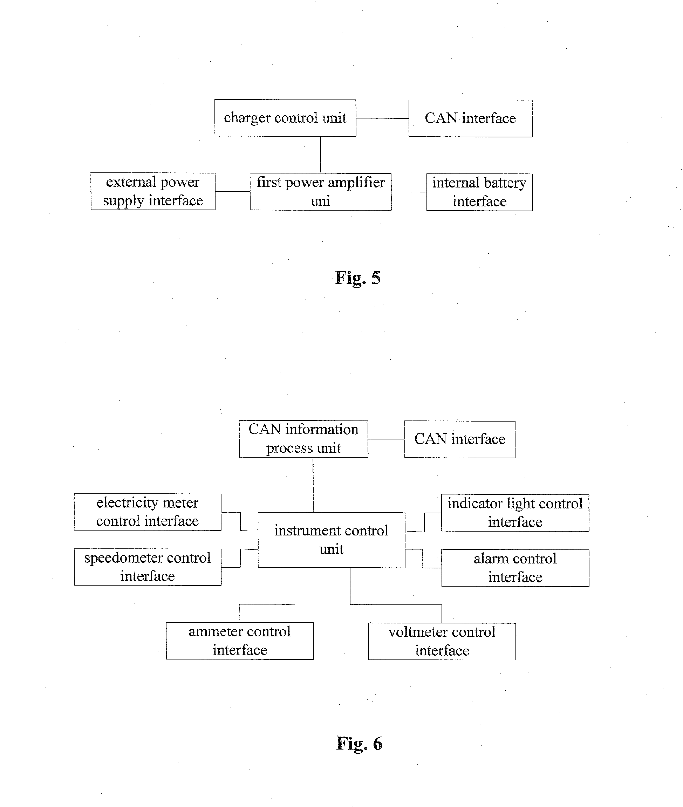

As shown in Figure 5, a charger control unit is provided in the charger 5, the charger control unit is provided with a CAN interface, an external power supply interface and an internal power supply interface, a first power amplifier unit is provided between the external power supply interface, the internal power supply interface and the motor control unit. The first power amplifier unit is controlled by the charger control unit, the charging current and the electric quantity are monitored in real time and the automatic charging control is performed on the battery according to the current state of the battery, the state information of the battery being charged is also sent to the whole vehicle controller 1 in real time and displayed by the CAN instrument.

As shown in Figure 6, an instrument control unit is provided in the CAN instrument display 6, the instrument control unit is provided with an electricity meter control interface, a speedometer control interface, an ammeter control interface, a voltmeter control interface, an alarm control interface, an indicator light control interface and a CAN interface, a CAN information process unit is provided between the instrument control unit and the CAN interface. By adding the embedded CAN information process unit, the CAN bus network communication with the whole vehicle controller 1 is achieved, all drive information, alarm information, motor state information and battery state information to be displayed are received and directly transferred to corresponding control interfaces of the instrument control unit by the embedded CAN information process unit, and corresponding instrument head control and indicator light control are implemented. The indications of the electricity meter, the speedometer, the ammeter and the voltmeter are controlled by corresponding PWM signals issued by the embedded CAN information process unit according to the received CAN information.

According to the present invention, on a premise that the requirements on vehicle body structure, counterweight and component shape are met, the electric technology requirement on the integrated control system is fully considered, the requirement of real-time control of various electronic control components and various communication speeds can be satisfied by implementing information exchange, processing and comprehensive control of respective electronic control components by the whole vehicle controller 3 and the two CAN bus networks, so that the control performance of the whole vehicle is optimized in whole and the expansibility of the electronic control system is enabled. With the whole vehicle comprehensive control strategy, for different operating conditions, functions of weak electricity control, strong electricity management, whole vehicle operating state control, braking energy recovery, whole vehicle fault protection, instrument display and the like of the whole vehicle integrated electronic control system are achieved by collecting drive signal and electronic control component information in real time.

## Claims

1. A whole vehicle integrated control system for a mini electric car, comprising a motor controller (1), a regenerative brake controller (2), a whole vehicle controller (3), a battery management system (4), a charger (5), a CAN instrument display (6) and a CAN bus network, the CAN bus network comprises a low-speed CAN bus network and a high-speed CAN bus network, the motor controller (1) and the regenerative brake controller (2) are connected with the whole vehicle controller (3) via the high-speed CAN bus network, the battery management system (4), the charger (5) and the CAN instrument display (6) are connected with the whole vehicle controller (3) via the low-speed CAN bus network.

2. The whole vehicle integrated control system for the mini electric car according to claim 1, a microcontroller is provided in the whole vehicle controller (3), and the microcontroller is provided with a power supply and communication interface, a high-speed CAN interface, a low-speed CAN interface and interfaces connected with an instrument driver, an information storage, an analog signal processor and a digital signal processor.

3. The whole vehicle integrated control system for the mini electric car according to claim 1, a motor control unit is provided in the motor controller (1), the motor control unit is provided with a CAN interface, a power supply interface and interfaces connected with a current sensor, a temperature sensor and a regenerative brake control unit, a power amplifier unit, a position sensor and a speed sensor are provided between the motor control unit and a motor, the power amplifier unit is connected with the power supply interface.

4. The whole vehicle integrated control system for the mini electric car according to claim 1, a battery management unit is provided in the battery management system (4), the battery management unit is provided with a CAN interface and interfaces connected with information of battery pack 1, information of battery pack 2, information of battery pack 3, information of battery pack 4, total-current information and a battery information storage and display unit.

5. The whole vehicle integrated control system for the mini electric car according to claim 1, a charger control unit is provided in the charger (5), the charger control unit is provided with a CAN interface, an external power supply interface and an internal power supply interface, a first power amplifier unit is provided between the external power supply interface, the internal power supply interface and the motor control unit.

6. The whole vehicle integrated control system for the mini electric car according to claim 1, an instrument control unit is provided in the CAN instrument display (6), the instrument control unit is provided with an electricity meter control interface, a speedometer control interface, an ammeter control interface, a voltmeter control interface, an alarm control interface, an indicator light control interface and a CAN interface, a CAN information process unit is provided between the instrument control unit and the CAN interface.
